# EUROPEAN PATENT APPLICATION

(11) **EP 1 036 617 A2**
(43) Date of publication of application: **20.09.2000**
(21) Application number: 00850046.4
(22) Date of filing: 16.03.2000
(51) Int. Cl.: B23B 1/00, B23B 3/06

(54) **A turning procedure and lathe**

(30) Priority: 16.03.1999 SE 9900988
(71) Applicant: Quintax Machine Tools AB, 591 29 Motala (SE)
(72) Inventor: Hagström, Allan, 591 60 Motala (SE)
(74) Representative: Karlsson, Leif Karl Gunnar

(57) **Abstract**

The present invention relates to a turning procedure for achieving a surface on a workpiece, which surface in a section through the axis (y) about which the workpiece (1) rotates during turning has a profile (2) with a varying distance (r) to the axis (y) where the distance (r) varies more than the difference between the radial distance (r₁, r₂) to the end points (A, B) of the profile. The lathe tool (3) is displaced along a first displacement line (z) by means of first drive means (12) and along a second displacement line (x) by means of second drive means (9).

The object of the invention is to eliminate the defects which arise in the surface at the change of direction normally required when turning such a surface.

According to the invention the first (z) and second (x) displacement lines and the axis of rotation (y) are so oriented in relation to each other that the displacement of the lathe tool (3) effected by respective drive means (12, 9) occurs unidirectionally.

The invention also relates to objects manufactured by means of the procedure and to a lathe for performing the procedure.

## Description

The present invention relates to a turning procedure as described in the preamble to claim 1. When turning a surface such as the concave surface of a ball bearing ring, the cutting edge of the lathe tool must describe a correspondingly curved path. This is generally achieved by the tool being displaceable along two lines located perpendicular to each other, with drive means and means for transferring motion for each displacement. The curvature of the surface to be turned forces the movement of the tool along at least one of the two lines to take place in two different directions, i.e. the movement turns and changes sign.

### Background of the invention

Such a turning operation can be performed, for instance, in a CNC controlled lathe or combined machine where the machining is based on interpolation technology. The lathe tool must then move in accordance with a path defined in the control program and effect cutting in the workpiece which geometrically follows the programmed path. The drive means of the machine slide, which in most cases consist of lead screws made with as little clearance as possible by means of prestressed balls or rollers, must thus alter their direction of movement. Two main effects result when the direction of movement and thus the direction of rotation of the lead screw are altered:
1. All action forces change direction and a load, which prior to the change in direction of movement had acted in one direction, will after the change act in the opposition direction through the lead screw. This phenomenon causes a dead band to occur due to spring and play in the lead screw, which is manifested as a deviation between the programmed path of the tool and the path the tool in fact describes.
2. The lead screws in a CNC controlled machine tool is in most cases driven by some form of servo motor. Machine slides also exist which are driven by linear drive units. In both cases the positioning servo acts so that there is a deviation between the set position value and the actual position value. In modern servo units the difference between set and actual value has been reduced to extremely small values. However, a certain deviation is unavoidable. This deviation, known as the servo error, results in the machine slide and thus the path of the machining tool deviating from that programmed in such a way that the tool lags after the programmed path. If the servo is then instructed via the control program to change its direction of movement, the lag results in the tool never reaching the outermost point intended by the program.

In practice the two shortcomings described above combine so that the influence from each is added to a common error known as the square step error.

The error is admittedly relatively slight. With modern CNC controlled lathes it can be reduced to in the order of 1µ. In many cases such irregularity in the finished surface can naturally be accepted. However, in certain cases not even such a slight error can be accepted. This applies when turning the ball race on a ring for a ball bearing, where even an error of about 0.5µ is unacceptable. In such cases a grinding operation must be subsequently performed, which considerably increases production costs.

Attempts to come to grips with this problem have hitherto focused on ways of trying to further reduce the error that occurs at the change of direction. The deflection can be reduced, for instance, by replacing ball nut screws with roller screws. However, such methods have been unsuccessful in reducing the error sufficiently for the surface not to require subsequent grinding if high accuracy is required such as in the case of ball bearing rings.

Against this background, the object of the present invention is to provide a method of turning wherein the above-mentioned error is eliminated.

### Summary of the invention

This object has been achieved by means of a procedure of the type described in the preamble to claim 1 comprising the special features defined in the characterizing part of claim 1.

Thanks to the displacement lines and the axis of rotation of the workpiece being oriented in relation to each other so that no change of direction is required, the occurrence of the error discussed above is eliminated. Thus the solution according to the invention is not based on attempts to reduce the error, but instead to completely eliminate the source of the error.

The procedure thus in practice provides a faultless machining surface that is sufficiently smooth to eliminate the need for subsequent grinding even when the most extreme demands are placed on surface uniformity.

According to a preferred embodiment of the invention the procedure is used for manufacturing a ring for a ball bearing or roller bearing. Machining of the ball race is a case in which the demands for surface uniformity are extremely high and, with conventional turning, the concave shape of the ball race necessitates the above-mentioned change of direction.

Although the inventive concept is applicable to all types of surfaces defined in the preamble to claim 1, turning of a profile with arc-shaped cross section is the most usual. It is often in the case of a surface of this shape that the smoothness is of great significance. The application of the procedure when turning an arc-shaped profile therefore constitutes a preferred embodiment of the invention.

It is simplest if the two displacement lines are perpendicular to each other, and this is therefore a suitable embodiment in most cases and constitutes a preferred embodiment of the invention. However, if the machine surface is strongly profiled, e.g. when the profile is an arc with more than 90° arc angle, a change of direction cannot be avoided unless the displacement axes form an angle with each other that is not a right-angle. This therefore constitutes an alternative preferred embodiment of the invention that permits error elimination even in the case of strongly curved surfaces.

The relative orientation between the displacement lines on the one hand and the axis of rotation on the other hand can easily be achieved by inclining either the axis of rotation or the displacement lines. Special variants for the orientation therefore constitute preferred embodiments of the invention.

The above and other advantageous embodiments of the procedure according to the invention are defined in the claims dependent on claim 1.

The invention also relates to a lathe for performing the procedure according to the invention, as well as objects manufactured in accordance with the procedure.

The invention will be explained in more detail by means of the following detailed description of preferred embodiments thereof, with reference to the accompanying drawings.

### Brief description of the drawings

- Figure 1: illustrates conventional turning,
- Figure 2: illustrates the principle of turning in accordance with the invention,
- Figure 3: is a diagram of a lathe operating in accordance with a first embodiment of the procedure according to the invention,
- Figure 4: is a sketch, similar to Figure 3, illustrating a second embodiment of the procedure according to the invention,
- Figure 5: is a sketch, similar to Figure 3, illustrating a third embodiment of the procedure according to the invention,

### Description of preferred embodiments of the invention

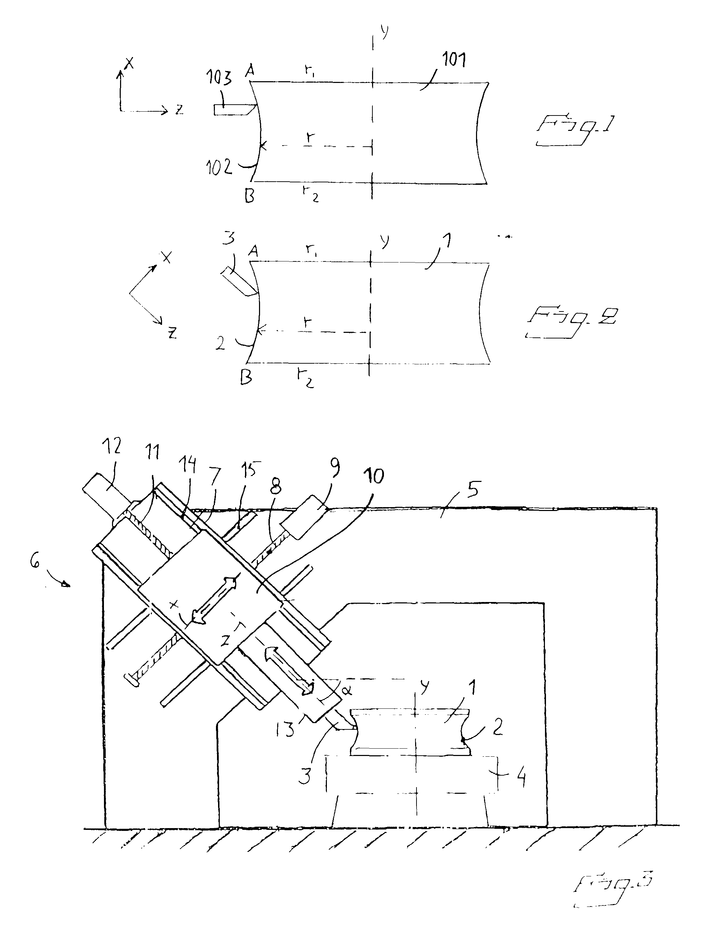

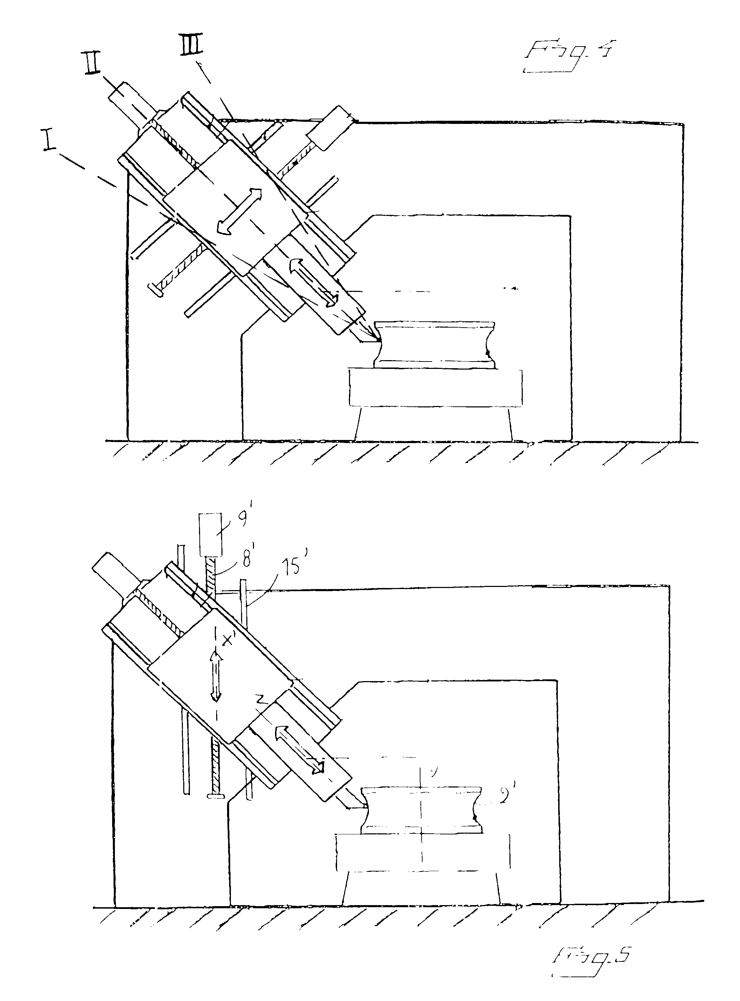

Figures 1 and 2 are intended to illustrate the problem and the principle solution according to the invention, where Figure 1 shows the principle of conventional turning and Figure 2 turning in accordance with the invention.

Figure 1 shows a workpiece 101 which, during turning of the surface 102, rotates about the axis y. In a section through the axis of rotation y, the surface 102 has the profile of an arc stretching between the end points A and B. The radial distance r thus varies continuously between the end points A and B. During turning of the surface 102 the lathe tool 103 is moved along a pre-programmed path from point A to point B. This is achieved by the tool being displaced in the x direction by first drive means and in the z direction by second drive means. Displacement in the z direction occurs unidirectionally downwards. Displacement in the x direction occurs first in positive direction, i.e. to the right in the figure, after which it turns at the bottom of the profile and occurs in negative direction. The square step error described in the introduction will inevitably occur at the change in direction.

Figure 2 shows an equivalent workpiece 1 where the co-ordinate system for the displacement lines of the lathe tool is inclined in relation to the axis of rotation y. In this case also the lathe tool is moved by being driven along two lines. As shown in the figure, not only the movement in z direction but also that in x direction then becomes unidirectional. The movement in x direction thus continues in positive direction right up to the end point B, even upon passage of the bottom of the profile 2.

The above principle is illustrated for an arc-shaped profile, in order to clearly show the principle and also because this is probably the most usual case. However, it should also be suggested that the procedure is also suitable for other profile shapes where the radius r varies more than the difference between the radii r₁, r₂ at the end points. It is naturally also applicable when the profile is convex.

Figure 3 is a diagram of a lathe operating in accordance with the procedure according to the invention. The workpiece 1 is placed on a table 4 rotating about the vertical axis y. The lathe tool 3 is controlled by a drive unit 6 in a stand 5. The drive unit 6 comprises drive means for displacing the lathe tool 3 in two orthogonal directions. As can be seen, the drive unit is oriented obliquely so that the z direction forms an angle with the horizontal plane and the x direction consequently forms a corresponding angle with the vertical plane.

The drive unit comprises a system for driving the tool 3 in either the x or the z direction. A machine slide 10 is displaceable in z direction via a lead screw 11, by means of a first drive motor 12. The machine slide 10 carries a tool holder 13, to which the lathe tool 3 is attached. The machine slide 10 is guided along tracks 14. The drive system for the z movement is mounted in a second machine slide 7 which is displaceable in x direction by means of a second drive motor 9 via a lead screw 8 and guided by tracks 15.

The movements are pre-programmed in known manner and the movement of the tool is unidirectional in both x and z direction, as described with reference to Figure 2.

The drive system shown in the figure shall naturally be seen only as an example. All known drive systems in the form of ordinary trapezoidal threaded lead screws, ball nut screws, roller screws, helical racks, hydraulic cylinders, pneumatic cylinders, linear motors, etc. are also encompassed within the scope of the invention.

It should also be understood that the drive unit may be oriented purely horizontally or vertically and the table 2 instead inclined so that the y axis becomes inclined. A combination is naturally also possible.

The procedure illustrated in Figure 3 is shown in conjunction with a lathe that is fixed in the direction of the drive unit, at an oblique angle α of 45°. Figure 4 shows an embodiment in which the drive unit can assume three different fixed positions I, II and III with an oblique angle α of 30°, 45° and 60°, respectively, for instance. The most suitable of these is chosen depending on the appearance of the profile. The procedure can advantageously be used in a lathe where the oblique angle of the drive unit can be set at an optional angle α between the extreme positions I and III, whereupon an optimal angle value can be used.

Corresponding modifications can of course be performed when orientation is achieved by inclining the worktable 2.

Figure 5 shows an embodiment in which the displacement lines z and x¹ are not orthogonal. A deeper profile can be turned in this embodiment. For an arc-shaped profile, for instance, an arc of up to about 135° arc angle can be machine with the illustrated angle between the z and x axes, without a change of direction in any of the directions.

## Claims

1. A procedure for turning a workpiece (1) to achieve a surface (2) on the workpiece, which surface in a section through the axis (y) about which the workpiece (1) rotates during turning has a profile (2) with a varying distance (r) to the axis (y), which distance (r) varies more than the difference between the radial distance (r₁, r₂) to the end points (A, B) of the profile, wherein the lathe tool (3) is displaced along a first displacement line (z) by means of first drive means (12) and along a second displacement line (x) by means of second drive means (9), **characterized** in that said first (z) and second (x) displacement lines and said axis of rotation (y) are so oriented in relation to each other that the displacement of the lathe tool (3) effected by respective drive means (12, 9) occurs unidirectionally.

2. A procedure as claimed in claim 1, **characterized** in that the workpiece (1 ) constitutes a ring for a ball bearing or roller bearing and in that said surface constitutes a race in the ring.

3. A procedure as claimed in claim 1 or claim 2, **characterized** in that the profile (2) is an arc.

4. A procedure as claimed in any of claims 1-3, characterized in that the orientation is achieved by said axis of rotation (y) and at least one of said displacement lines (z, x) being oriented so that they form an angle (α) with each other that is not a right-angle.

5. A procedure as claimed in any of claims 1-4, **characterized** in that the orientation is achieved by orienting the axis of rotation (y) obliquely in relation to the vertical.

6. A procedure as claimed in any of claims 1-5, **characterized** in that the orientation is achieved by orienting at least one of the displacement lines (z, x) obliquely in relation to the vertical.

7. A procedure as claimed in any of claims 1-6, **characterized** in that the first (z) and the second (x) displacement lines are orthogonal.

8. A procedure as claimed in any of claims 1-6, **characterized** in that the first (z) and the second (x¹) displacement lines form an angle with each other that is not a right-angle.

9. A procedure as claimed in any of claims 1-8, **characterized** in that the relative direction between at least two of the axis of rotation (y), the first displacement line (z) and the second displacement line (x) is continuously changed during turning of the surface.

10. A procedure as claimed in any of claims 1-8, **characterized** in that the axis of rotation (y), the first displacement line (z) and the second displacement line (x) are oriented in relation to each other in one of a limited number of predetermined positions, preferably in one of two to four predetermined positions.

11. A lathe for performing the procedure as claimed in any of claims 1-10.

12. An object produced by means of the procedure as claimed in any of claims 1-10.

13. Ball bearings or roller bearings provided with rings manufactured by means of the procedure as claimed in any of claims 1-10.
